# EUROPEAN PATENT SPECIFICATION

(11) **EP 4 404 351 B1**
(45) Date of publication and mention of the grant of the patent: **29.04.2026**
(21) Application number: 23851090.3
(22) Date of filing: 26.04.2023
(51) Int. Cl.: H01M 50/213, H01M 50/238, H01M 50/249, H01M 50/503

(54) **BATTERY MODULE**
BATTERIEMODUL
MODULE DE BATTERIES

(30) Priority: 05.12.2022 KR 20220167628
(43) Date of publication of application: 24.07.2024
(73) Proprietor: LG ENERGY SOLUTION, LTD., Seoul 07335 (KR)
(72) Inventor: LIU, Tzu-Cheng, Taipei City 11494 (TW)
(74) Representative: Goddar, Heinz J.
(86) International application number: PCT/KR2023/005690
(87) International publication number: WO 2024/122761

(56) References cited:
- EP-A1- 3 299 224
- EP-B1- 2 950 366
- WO-A1-2018/024791
- DE-A1- 102015 117 988
- KR-A- 20210 022 219
- KR-A- 20220 101 993
- KR-A- 20220 101 994
- KR-U- 20170 003 649
- US-A1- 2017 309 874
- US-B1- 7 785 325

## Description

### TECHNICAL FIELD

The present disclosure relates to a battery module, more particularly, to a battery module including a plurality of battery assemblies. The present application claims priority to Korean Patent Application No. 10-2022-0167628 filed on December 5, 2022 in the Republic of Korea.

### BACKGROUND ART

A battery module of an electric bicycle is generally disposed on a lower tube of a bicycle frame. The battery module includes a plurality of battery assemblies connected sequentially, and a fixing spoke sequentially passes through the battery assemblies to fix them to each other. Also, the battery assemblies are disposed to be sequentially arranged along the lower tube of the frame. However, since the battery assembly is arranged only in a straight direction due to the limitation of the fixing spoke, and thus can be used only for the straight lower tube, thereby limiting the versatility of the battery module.

WO 2018/024791 A1 relates to the field of electrical energy storage systems, typically based on electric battery cells, intended to be integrated into a mast via a lateral opening formed therein, and covered by a hatch.

### DISCLOSURE

### Technical Problem

The present disclosure is directed to providing a battery module having good versatility.

### Technical Solution

According to the present disclosure, there is provided a battery module, which includes a plurality of battery assemblies and a flexible rod. Each battery assembly includes a frame and at least one battery unit, and the battery unit is disposed within the frame. The flexible rod sequentially passes through the battery assemblies, and the battery assemblies jointly construct a curved structure by bending the flexible rod.

According to the present disclosure, the frame has a perforated hole, and the flexible rod may pass through the perforated hole.

In an embodiment of the present disclosure, the battery module may further comprise at least one conductive elastic piece, and the at least one conductive elastic piece may be connected between one of the battery assemblies and another of the battery assemblies.

In an embodiment of the present disclosure, the battery assemblies may be sequentially connected to each other.

In an embodiment of the present disclosure, the material of the flexible rod may include metal.

In an embodiment of the present disclosure, the flexible rod may be a coil tube.

The battery module may further comprise a conductive elastic piece connected between two adjacent battery assemblies so that the battery unit of each battery assembly is electrically connected to the battery unit of another adjacent battery assembly.

At this time, the conductive elastic piece may be deformed according to the bending of the battery module.

In addition, the battery module may include an upper battery unit and a lower battery unit, the upper battery unit may be electrically connected to the lower battery unit through a conductive sheet, and the flexible rod may pass between the upper battery unit and the lower battery unit.

The battery assembly may include a pivotal joint, and the plurality of battery assemblies are sequentially connected to each other through the pivotal joint.

### Advantageous Effects

According to the above, in the battery module according to the present disclosure, a plurality of battery assemblies are connected to each other through a flexible rod so that a user may adjust the battery module into a curved shape by bending the flexible rod and install the battery module to the lower tube of a bicycle frame having various curvatures.

### DESCRIPTION OF DRAWINGS

FIG. 1 is a side view showing an example of a battery module according to an embodiment of the present disclosure.
FIG. 2 is a diagram showing bending of the battery module in FIG. 1.
FIG. 3 is a cross-sectional view showing the battery module in FIG. 1.
FIG. 4 shows that the battery module in FIG. 2 is installed at a bicycle frame.
FIG. 5 is a diagram showing a local structure of the battery module in FIG. 1.

### BEST MODE

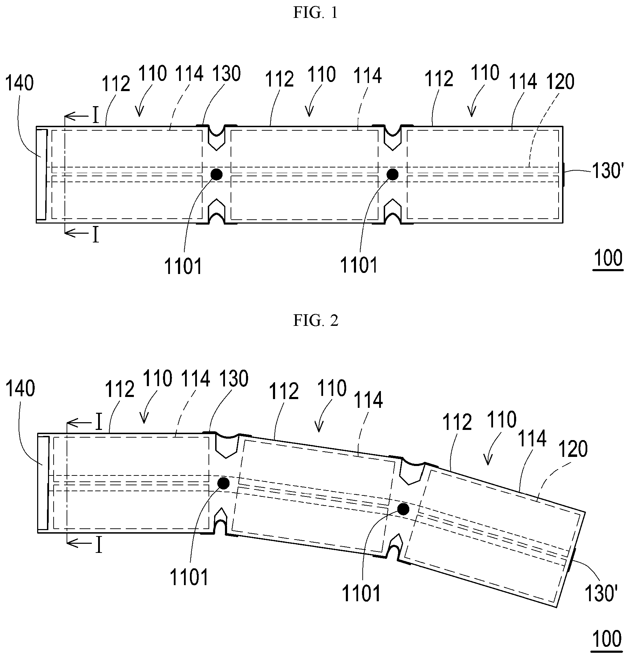

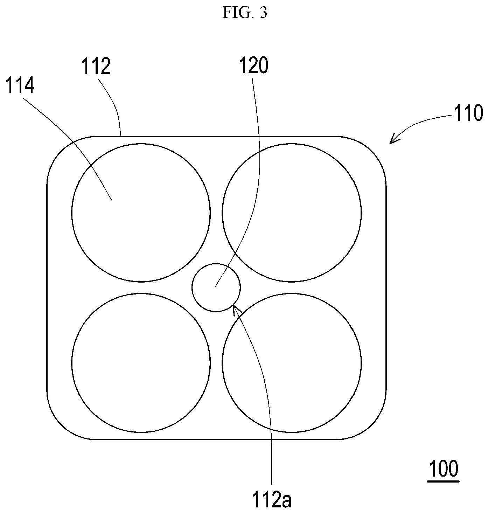

FIG. 1 is a side view showing an example of a battery module according to an embodiment of the present disclosure. FIG. 2 is a diagram showing bending of the battery module in FIG. 1. FIG. 3 is a cross-sectional view showing the battery module in FIG. 1.

Referring to FIGS. 1 to 3, a battery module 100 according to this embodiment includes a plurality of battery assemblies 110 and a flexible rod 120. Each battery assembly 110 includes a frame 112 and a plurality of battery units 114, and the battery units 114 are disposed within the frame 112. FIGS. 1 to 3 illustratively show the frame 112, and the frame 112 may actually cover the battery unit 114 only locally. The flexible rod 120 sequentially penetrates the frame 112 of the battery assembly 110, and the battery assemblies 110 may jointly construct a curved structure by bending the flexible rod 120 as shown in FIG. 2.

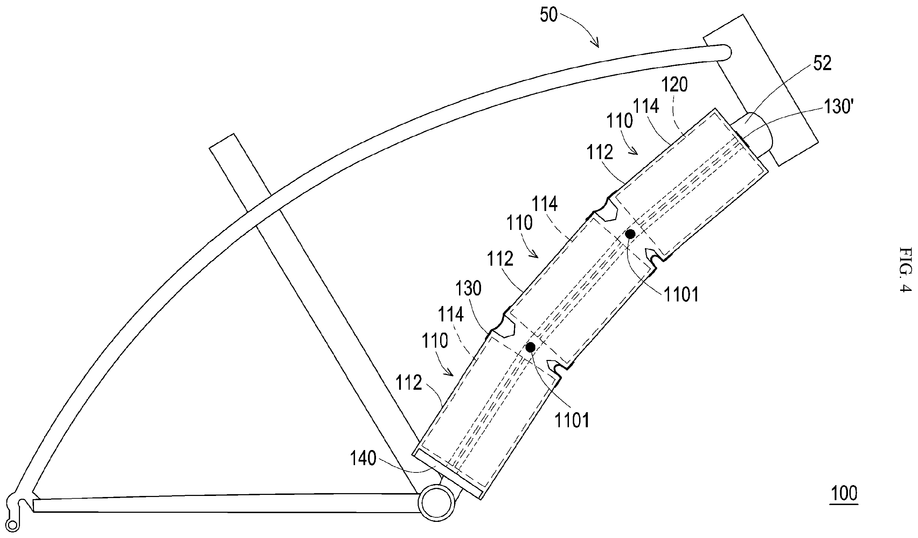

FIG. 4 shows that the battery module in FIG. 2 is installed at a bicycle frame. As described above, in the battery module 100 according to this embodiment, the plurality of battery assemblies 110 are connected to each other through the flexible rod 120 so that the user may adjust the battery module 100 into a curved shape by bending the flexible rod 120, thereby allowing the battery module 100 to be installed to the bent lower tube 52 of the bicycle frame 50 shown in FIG. 4. The user may adjust the battery module 100 to have different curvatures by bending the flexible rod 120 so that the battery module may be installed to the lower tube of the bicycle frame having different curvatures. Therefore, the battery module 100 according to this embodiment has good versatility.

Referring to FIG. 3, in this embodiment, the frame 112 includes a perforated hole 112a, and the flexible rod 120 sequentially passes through the perforated hole 112a of each frame 112. The material of the flexible rod 120 according to this embodiment includes metal. Specifically, the flexible rod 120 may be a coil tube.

As shown in FIG. 1, the battery module 100 according to this embodiment includes a plurality of conductive elastic pieces 130 and a conductive sheet 130'. Each conductive elastic piece 130 is connected between two adjacent battery assemblies 110 so that the battery unit 114 of each battery assembly 110 is electrically connected to the battery unit 114 of another adjacent battery assembly 110 through the conductive elastic piece 130. Also, each conductive elastic piece 130 may be deformed according to the bending of the battery module 100. In addition, in the rightmost battery assembly 110 shown in FIG. 1, the upper battery unit 114 is electrically connected to the lower battery unit 114 through the conductive sheet 130'. The flexible rod 120 may pass between the upper battery unit 114 and the lower battery unit 114.

In addition, in the leftmost battery assembly 110 shown in FIG. 1, the upper battery unit 114 and the lower battery unit 114 are electrically connected to a battery management system 140. Accordingly, the battery units 114 are connected to each other in a serial connection method and connected to the battery management system 140. FIGS. 1 and 2 exemplarily show that the battery units 114 are electrically connected to each other through the conductive elastic piece 130, but in reality, the conductive elastic piece 130 may be appropriately extended to directly contact the battery unit 114, or a conductive structure may be provided between the conductive elastic piece 130 and the battery unit 114 so that the conductive elastic piece 130 and the battery unit 114 are connected to each other. In this embodiment, the conductive elastic piece 130 may be connected between two battery assemblies 110 by, for example, screw locking, riveting, snapping, etc., or may be connected between two battery assemblies 110 by other suitable means, and the present disclosure is not limited thereto.

In this embodiment, as shown in FIG. 1, each battery assembly 110 has a pivotal joint 1101, and the battery assemblies 110 are sequentially connected to each other through the pivotal joint 1101. The pivotal joint 1101 in FIG. 1 is shown as an example, and will be described in detail below.

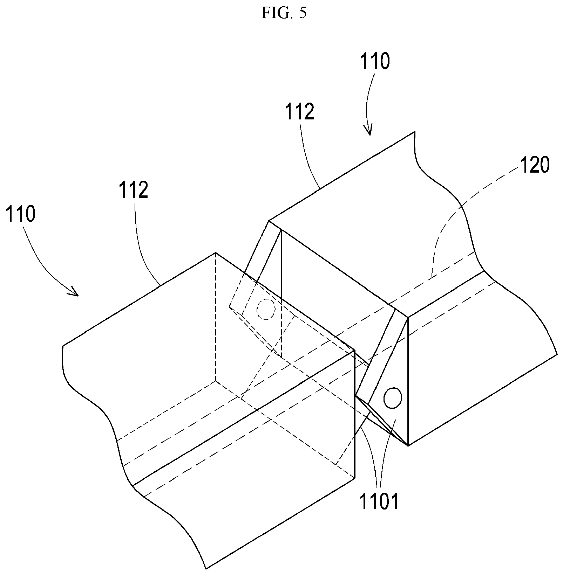

FIG. 5 is a diagram showing a local structure of the battery module in FIG. 1. Referring to FIG. 5, the pivotal joint 1101 of each battery assembly 110 extends, for example, from the frame 112 and is connected to a pivotal joint 1101 of another battery assembly 110. The pivotal joint 1101 and another pivotal joint 1101 may be connected to each other through, for example, a pivot shaft or other appropriate methods, but the present disclosure is not limited thereto.

According to the above, in the battery module according to the present disclosure, a plurality of battery assemblies are connected to each other through a flexible rod so that a user may adjust the battery module into a curved shape by bending the flexible rod and install the battery module to the lower tube of a bicycle frame having various curvatures.

### Reference Signs

50: frame
52: lower tube
100: battery module
110: battery assembly
1101: pivotal joint
112: frame
112a: perforated hole
114: battery unit
120: flexible rod
130: conductive elastic piece
130': conductive sheet
140: battery management system

## Claims

1. A battery module (100) for installation in a bicycle frame (50), comprising:
a plurality of battery assemblies (110) including at least one battery unit (114), and
a flexible rod (120) configured to sequentially pass through the battery assemblies (110), so that the battery assemblies (110) jointly construct a curved structure by bending the flexible rod (120),
**characterized in that**
the plurality of battery assemblies (110) further include a frame (112), so that the at least one battery unit (114) is disposed within the frame (112),
wherein the frame (112) has a perforated hole (112a), and the flexible rod (120) passes through the perforated hole (112a).

2. The battery module (100) according to claim 1, further comprising at least one conductive elastic piece (130),
wherein the at least one conductive elastic piece (130) is connected between one of the battery assemblies (110) and another of the battery assemblies (110).

3. The battery module (100) according to claim 1,
wherein the battery assemblies (110) are sequentially connected to each other.

4. The battery module (100) according to claim 1,
wherein the material of the flexible rod (120) includes metal.

5. The battery module (100) according to claim 1,
wherein the flexible rod (120) is a coil tube.

6. The battery module (100) according to claim 1,
wherein the battery module (100) further comprises a conductive elastic piece (130) connected between two adjacent battery assemblies (110) so that the battery unit (114) of each battery assembly (110) is electrically connected to the battery unit (114) of another adjacent battery assembly (110).

7. The battery module (100) according to claim 6,
wherein the conductive elastic piece (130) is deformed according to the bending of the battery module (100).

8. The battery module (100) according to claim 6,
wherein the battery module (100) includes an upper battery unit (114) and a lower battery unit (114), the upper battery unit (114) is electrically connected to the lower battery unit (114) through a conductive sheet (130'), and the flexible rod (120) passes between the upper battery unit (114) and the lower battery unit (114).

9. The battery module (100) according to claim 1,
wherein the battery assembly (110) includes a pivotal joint (1101), and the plurality of battery assemblies (110) are sequentially connected to each other through the pivotal joint (1101).

## Patentansprüche

1. Batteriemodul (100) zum Einbau in einen Fahrradrahmen (50), umfassend:
eine Vielzahl von Batteriebaugruppen (110), die wenigstens eine Batterieeinheit (114) aufweisen, und
ein flexibler Stab (120), der dazu ausgelegt ist, die Batteriebaugruppen (110) derart nacheinander zu durchdringen, dass die Batteriebaugruppen (110) durch Biegen des flexiblen Stabes (120) gemeinsam eine gekrümmte Struktur bilden,
**dadurch gekennzeichnet, dass**
die Vielzahl von Batterieanordnungen (110) ferner einen Rahmen (112) umfassen, so dass die wenigstens eine Batterieeinheit (114) innerhalb des Rahmens (112) angeordnet ist,
wobei der Rahmen (112) ein perforiertes Loch (112a) aufweist und der flexible Stab (120) durch das perforierte Loch (112a) verläuft.

2. Batteriemodul (100) nach Anspruch 1, das ferner wenigstens ein leitfähiges elastisches Stück (130) umfasst,
wobei das wenigstens eine leitfähige elastische Stück (130) zwischen einer der Batteriebaugruppen (110) und einer anderen der Batteriebaugruppen (110) verbunden ist.

3. Batteriemodul (100) nach Anspruch 1,
wobei die Batteriebaugruppen (110) nacheinander miteinander verbunden sind.

4. Batteriemodul (100) nach Anspruch 1,
wobei das Material des flexiblen Stabes (120) Metall umfasst.

5. Batteriemodul (100) nach Anspruch 1,
wobei der flexible Stab (120) ein Spiralrohr ist.

6. Batteriemodul (100) nach Anspruch 1,
wobei das Batteriemodul (100) ferner ein leitendes elastisches Stück (130) umfasst, das zwischen zwei benachbarten Batteriebaugruppen (110) angeschlossen ist, so dass die Batterieeinheit (114) jeder Batteriebaugruppe (110) elektrisch mit der Batterieeinheit (114) einer anderen, benachbarten Batteriebaugruppe (110) verbunden ist.

7. Batteriemodul (100) nach Anspruch 6,
wobei das leitende elastische Stück (130) entsprechend der Biegung des Batteriemoduls (100) verformt wird.

8. Batteriemodul (100) nach Anspruch 6,
wobei das Batteriemodul (100) eine obere Batterieeinheit (114) und eine untere Batterieeinheit (114) umfasst, wobei die obere Batterieeinheit (114) mit der unteren Batterieeinheit (114) durch eine leitende Platte (130') elektrisch verbunden ist und der flexible Stab (120) zwischen der oberen Batterieeinheit (114) und der unteren Batterieeinheit (114) verläuft.

9. Batteriemodul (100) nach Anspruch 1,
wobei die Batteriebaugruppe (110) ein Drehgelenk (1101) aufweist und die mehreren Batteriebaugruppen (110) nacheinander durch das Drehgelenk (1101) miteinander verbunden sind.

## Revendications

1. Module de batteries (100) pour une installation dans un cadre de bicyclette (50), comprenant :
une pluralité d'ensembles de batteries (110) incluant au moins une unité de batterie (114), et
une tige flexible (120) configurée pour passer séquentiellement à travers les ensembles de batteries (110), de sorte que les ensembles de batteries (110) construisent conjointement une structure incurvée grâce à la flexion de la tige flexible (120),
**caractérisé en ce que**
la pluralité d'ensembles de batteries (110) inclut en outre un cadre (112), de sorte que l'au moins une unité de batterie (114) est disposée au sein du cadre (112),
dans lequel le cadre (112) a un trou perforé (112a), et la tige flexible (120) passe à travers le trou perforé (112a).

2. Module de batteries (100) selon la revendication 1, comprenant en outre au moins une pièce élastique conductrice (130),
dans lequel l'au moins une pièce élastique conductrice (130) est connectée entre l'un des ensembles de batteries (110) et un autre des ensembles de batteries (110).

3. Module de batteries (100) selon la revendication 1,
dans lequel les ensembles de batteries (110) sont connectés séquentiellement les uns aux autres.

4. Module de batteries (100) selon la revendication 1,
dans lequel le matériau de la tige flexible (120) inclut du métal.

5. Module de batteries (100) selon la revendication 1,
dans lequel la tige flexible (120) est un tube spiralé.

6. Module de batteries (100) selon la revendication 1,
dans lequel le module de batteries (100) comprend en outre une pièce élastique conductrice (130) connectée entre deux ensembles de batteries adjacents (110) de sorte que l'unité de batterie (114) de chaque ensemble de batteries (110) est connectée électriquement à l'unité de batterie (114) d'un autre ensemble de batteries adjacent (110).

7. Module de batteries (100) selon la revendication 6,
dans lequel la pièce élastique conductrice (130) est déformée suivant la flexion du module de batteries (100).

8. Module de batteries (100) selon la revendication 6,
dans lequel le module de batteries (100) inclut une unité de batterie supérieure (114) et une unité de batterie inférieure (114), l'unité de batterie supérieure (114) étant connectée électriquement à l'unité de batterie inférieure (114) par l'intermédiaire d'une feuille conductrice (130'), et la tige flexible (120) passe entre l'unité de batterie supérieure (114) et l'unité de batterie inférieure (114).

9. Module de batteries (100) selon la revendication 1,
dans lequel l'ensemble de batteries (110) inclut une articulation à pivot (1101), et la pluralité d'ensembles de batteries (110) sont connectés séquentiellement les uns aux autres par l'intermédiaire de l'articulation à pivot (1101).
